# EUROPÄISCHE PATENTSCHRIFT

(11) **EP 3 071 842 B1**
(45) Veröffentlichungstag und Bekanntmachung des Hinweises auf die Patenterteilung: **16.10.2019**
(21) Anmeldenummer: 13795693.4
(22) Anmeldetag: 22.11.2013
(51) Int. Cl.: F15B 13/08

(54) **VENTILANORDNUNG UND FLUIDISCHES SYSTEM**
VALVE ASSEMBLY AND FLUID SYSTEM
SOUPAPE ET SYSTÈME FLUIDIQUE

(43) Veröffentlichungstag der Anmeldung: 28.09.2016
(73) Patentinhaber: Festo AG & Co. KG, 73734 Esslingen (DE)
(72) Erfinder: MAICHL, Martin, 73084 Salach (DE); HUFNAGL, Herbert, 73773 Aichwald (DE); FORCHT, Ralf, 73240 Wendlingen (DE)
(74) Vertreter: Patentanwälte Magenbauer & Kollegen Partnerschaft mbB
(86) Internationale Anmeldenummer: PCT/EP2013/003524
(87) Internationale Veröffentlichungsnummer: WO 2015/074674

(56) Entgegenhaltungen:
- EP-A1- 1 584 945
- EP-A1- 2 026 156
- EP-A1- 2 549 125
- EP-A2- 0 962 663
- EP-A2- 1 041 325

## Beschreibung

Die Erfindung betrifft eine Ventilanordnung zur Beeinflussung wenigstens eines Fluidstroms wie sie beispielsweise in der Automatisierungstechnik eingesetzt wird, um fluidisch betreibbare Aktoren wie Pneumatikzylinder oder pneumatische Drehantriebe in geeigneter Weise anzusteuern. Ferner betrifft die Erfindung ein fluidisches System.

Die EP 0962663 A2 offenbart eine Steuereinrichtung für fluidbetätige Verbraucher, die mindestens ein Steuermodul und mindestens ein über Verbindungsmittel an dem Steuermodul festlegbares Ergänzungsmodul aufweist. Sowohl das Steuermodul als auch die Ergänzungsmodule sind mit Ventilen ausgestattet, denen elektrische Betätigungseinrichtungen zugeordnet sind. Ferner verfügt jedes Modul über elektrische Sensoreingänge. Zwischen den Modulen sind elektrische Schnittstellenmittel und fluidische Schnittstellenmittel vorgesehen, so daß durch Verknüpfung der Module gleichzeitig eine elektrische und fluidische Verbindung hergestellt wird. Die Fluidversorgung der Steuereinrichtung erfolgt über eine an dem Steuermodul vorgesehene Haupt-Anschlußeinrichtung. Ferner ist das Steuermodul mit einer Busstation ausgestattet, über die der Anschluß an eine externe elektronische Steuereinheit möglich ist.Die EP 1 584 945 A1 offenbart ein Steuermodul mit Steuermitteln zur Ansteuerung mindestens eines Aktors, mit dem ein Objekt bewegbar ist, mit Schnittstellenmitteln für eine Bilderfassungsvorrichtung zur Erfassung von Bilddaten des bewegten Objekts. Bei dem Steuermodul ist vorgesehen, dass die Steuermittel zur Ansteuerung des mindestens einen Aktors in Abhängigkeit von Bildanalysedaten ausgestaltet sind, die durch die Bilderfassungsvorrichtung anhand von Bilddaten des bewegten Objekts erzeugt sind.

Aus der EP 2 026 156 A1 ist eine Modulanordnung mit in einer Reihenrichtung aneinandergereihten Modulen bekannt, wobei die Module wenigstens teilweise als Ventilmodule ausgebildet sind und ein Modul als Steuermodul ausgebildet ist und mit den anderen Modulen über quer durch diese Module verlaufende Steuer- und/oder Sensorleitungen verbunden ist. Quer durch die Module verlaufen ferner von einer Spannungsquelle gespeiste Spannungsversorgungsleitungen. Wenigstens ein Modul ist als Sicherheitsmodul ausgebildet und besitzt Schaltmittel zur Unterbrechung der Spannungsversorgungsleitungen zu den über das Sicherheitsmodul versorgten Modulen im betätigten Zustand. Zur Betätigung der Schaltmittel sind sicherheitsrelevante Steuer- und/oder Diagnosemittel vorgesehen.

Die Aufgabe der Erfindung besteht darin, eine Ventilanordnung bereitzustellen, die eine Beeinflussung wenigstens eines Fluidstroms mit einer hohen Taktfrequenz, also mit einer Vielzahl von Schaltzyklen pro Zeiteinheit, ermöglicht.

Diese Aufgabe wird gemäß einem ersten Aspekt durch eine Ventilanordnung mit den Merkmalen des Anspruchs 1 gelöst. Erfindungsgemäß gliedert sich die Ventilanordnung somit in zwei wesentliche Hauptkomponenten. Die erste Hauptkomponente ist dabei die Steuereinrichtung, die für die Kommunikation mit dem Buskommunikationssystem und für die Umsetzung der Bewegungsbefehle in Steuerbefehle ausgebildet ist. Die zweite Hauptkomponente ist die Ventileinrichtung, die für die praktische Umsetzung der Steuerbefehle in tatsächliche Fluidströme ausgebildet ist und hierzu in Verbindung mit Ventilen und Sensormitteln gebracht werden kann. Eine derartige Ventilanordnung kann beispielsweise über ein untergeordnetes Buskommunikationssystem mit einem Busknoten verbunden werden, der seinerseits über ein übergeordnetes Buskommunikationssystem mit einer übergeordneten Steuerungseinrichtung, insbesondere einer speicherprogrammierbaren Steuerung, kommunizieren kann. Alternativ kann auch vorgesehen werden, die Ventilanordnung ohne Zwischenschaltung eines Busknotens direkt mit dem übergeordneten Buskommunikationssystem zu verbinden.

Da in der Ventilanordnung sowohl die Steuereinrichtung als auch die Ventileinrichtung als Computer in Form der Verarbeitungseinrichtung bzw. der Verarbeitungsmittel und dementsprechend mit einer gewissen Rechenleistung ausgestattet sind, kann vorzugsweise vorgesehen werden, dass die übergeordnete Steuerungseinrichtung abstrakte Bewegungsbefehle, insbesondere über den Busknoten, an die Ventilanordnung übermittelt, wobei diese Bewegungsbefehle keine oder nur sehr wenige Details über die Durchführung der jeweiligen Bewegung umfassen. Diese

Details werden erst durch Verarbeitung der Bewegungsbefehle in der Verarbeitungseinrichtung bzw. in den Verarbeitungsmitteln durch geeignete Algorithmen und unter Einbeziehung spezifischer Parameter und Messwerte der angeschlossenen Ventile und Sensormittel errechnet. Somit wird zum einen für eine Kommunikation zwischen der übergeordneten Steuerungseinrichtung und der Ventilanordnung nur eine geringe Bandbreite für die Übertragung der abstrakten Bewegungsbefehle benötigt, andererseits können die zur Umsetzung der Bewegungsbefehle notwendigen Berechnungen vor Ort in unmittelbarer Umgebung der anzusteuernden Ventile durchgeführt werden. Weiterhin ist es vorteilhaft, dass den Verarbeitungsmitteln neben den ersten Anschlussmitteln, die zur elektrischen Ankopplung von elektrisch ansteuerbaren Ventilen ausgebildet sind, auch zweite Anschlussmittel zugeordnet sind, die zur elektrischen Ankopplung von Sensormitteln ausgebildet sind. Dadurch können Sensorsignale angeschlossener Sensormittel direkt in den Verarbeitungsmitteln verarbeitet werden. Dies ermöglicht eine besonders schnelle und effiziente Berücksichtigung von Zuständen der an den ersten Anschlussmitteln angeschlossenen Ventile und/oder von Fluidverbrauchern, die fluidisch mit den Ventilen verbunden sind und mit entsprechenden Sensormitteln ausgerüstet sind, in den Verarbeitungsmitteln. Vorzugsweise kommt der Verarbeitungseinrichtung die Aufgabe zu, die Aktionen mehrerer Ventileinrichtungen zu koordinieren, um die gewünschte Umsetzung der Bewegungsbefehle in entsprechende von den angeschlossenen Ventilen freizugebenden Fluidströmen und daraus resultierende Bewegungen von angeschlossenen Aktoren durchzuführen. Dementsprechend ist eine bidirektionale Kommunikation zwischen der Steuereinrichtung und der Ventileinrichtung vorteilhaft, da hierdurch sowohl an den Ventileinrichtungen eintreffende Sensorsignale als auch von den Ventileinrichtungen ausgegebene Stellsignale für die einzelnen Ventile an die Verarbeitungseinrichtung übertragen werden können, die hierdurch ihre Aufgabe als Kontrollinstanz für die einzelnen Ventileinrichtungen wahrnehmen kann.

Vorteilhafte Weiterbildungen der Erfindung sind in den Unteransprüchen angegeben.

Zweckmäßig ist es, wenn die Steuereinrichtung in einem ersten Gehäuse und die wenigstens eine Ventileinrichtung in einem zweiten, separaten Gehäuse aufgenommen sind und wenn eine leitergebundene Verbindung zwischen der Steuereinrichtung und der Ventileinrichtung ausgebildet ist. Hierdurch können die Ventileinrichtungen unmittelbar an den Aktoren angeordnet werden, die mit Hilfe der von den zugeordneten Ventilen freigebbaren Fluidströme angesteuert werden sollen. Die Steuereinrichtung hat hingegen die Aufgabe, mehrere der Ventileinrichtungen mit entsprechenden Steuerbefehlen zu versorgen und die Ventileinrichtungen zu koordinieren, so dass eine abgesetzte Anordnung der Steuereinrichtung vorteilhaft ist. Exemplarisch ist für die leitergebundene Verbindung zwischen der Steuereinrichtung und der Ventileinrichtung eine serielle Datenübertragung, insbesondere über einen synchronen seriellen Datenbus nach dem Serial Peripheral Interface-Standard (SPI-Standard) vorgesehen. Hierdurch kann in kostengünstiger Weise eine effiziente Datenübertragung sowohl der Steuerbefehle als auch der Rückmeldungen der einzelnen Ventileinrichtungen an die Steuereinrichtung gewährleistet werden kann.

Bei einer Weiterbildung der Erfindung ist vorgesehen, dass am zweiten Anschlussmittel der Ventileinrichtung wenigstens ein Drucksensor zur Ermittlung eines Fluiddrucks und/oder wenigstens ein Positionssensor zur Ermittlung einer Ventilstellung eines Ventils angeschlossen sind. Sowohl mit Hilfe des Drucksensor als auch mit Hilfe des, insbesondere als Hubsensor für eine Ermittlung eines Ventilhubs ausgebildeten, Positionssensors ist eine Ermittlung eines Funktionszustands eines mit der Ventileinrichtung verbundenen Ventils möglich, so dass die Ventileinrichtung ständig oder zu gegebenen Zeitpunkten Informationen darüber abrufen kann, ob das Ventil eine vorgegebene Ventilstellung eingenommen hat und/oder ob sich an einem Messpunkt, an dem der Drucksensor angeordnet ist, ein entsprechender Fluiddruck eingestellt hat. Hierdurch kann eine vorteilhafte Überwachung der Ventilfunktionen der an die Ventileinrichtung angeschlossenen Ventile verwirklicht werden.

Bevorzugt ist vorgesehen, dass wenigstens ein fluidischer Aktor mit wenigstens einem der Ventile gekoppelt ist, dass die Verarbeitungseinrichtung zur Ermittlung von Bewegungsprofilen für den wenigstens einen fluidischen Aktor anhand von Bewegungsbefehlen ausgebildet ist und dass die Verarbeitungseinrichtung und/oder das Verarbeitungsmittel für eine Umsetzung der Bewegungsprofile in Stellsignale für die Ventile ausgebildet sind. Der Verarbeitungseinrichtung in der Steuereinrichtung kommt somit die Aufgabe zu, eintreffende Bewegungsbefehle der übergeordneten Steuerungseinrichtung in Bewegungsprofile für den Aktor umzusetzen, um damit die Verarbeitungsmittel in die Lage zu versetzen, eine geeignete Ansteuerung der Ventile vorzunehmen, die mit den jeweiligen Ventileinrichtungen verbunden sind. Diese Bewegungsprofile gehen über ein schlichtes Schalten der jeweiligen, insbesondere als Proportionalventile ausgebildeten, Ventile hinaus und umfassen beispielsweise Vorgaben für die Veränderung der Fluidströmung durch das jeweils anzusteuernde Ventil, um eine vorteilhafte Ansteuerung des mit dem Ventil verbundenen Fluidverbrauchers, insbesondere Aktors, zu ermöglichen. Die beispielsweise als Steuerbefehle von der Steuereinrichtung an die Ventileinrichtung übertragenen Bewegungsprofile werden in den Verarbeitungsmitteln der Ventileinrichtung in die Stellsignale für die Ventile umgesetzt. Ergänzend oder alternativ kann auch vorgesehen sein, dass die Bewegungsprofile bereits in der Verarbeitungseinrichtung teilweise oder vollständig in Stellsignale umgesetzt werden, die an die Verarbeitungsmittel bereitgestellt werden, um dort die gewünschten Stellsignale für die Ansteuerung der Ventile zu erzeugen.

Beispielhaft führt eine Bereitstellung eines rampenartigen Bewegungsprofils von der Verarbeitungseinrichtung an die Verarbeitungsmittel exemplarisch zu einem ebenfalls rampenartigen elektrischen Stellsignal für das anzusteuernde Ventil. Sofern der Verarbeitungseinrichtung eine spezielle Charakteristik des, insbesondere elektrischen, Antriebs des angeschlossenen Ventils bekannt ist, kann jedoch aus dem rampenartigen Bewegungsprofil ein Stellsignal abgeleitet werden, das individuell auf den Antrieb für das jeweilige Ventil zugeschnitten ist. Dieses individuelle Stellsignal kann sich erheblich vom rampenartigen Bewegungsprofil unterscheiden und soll letztlich zu einer Veränderung der Fluidströmung durch das angeschlossene Ventil führen, durch die das rampenartige Bewegungsprofil in Form einer entsprechenden Aktion, insbesondere einer Bewegung des angeschlossenen Fluidverbrauchers, repräsentiert wird. Hierbei ist vorteilhaft, dass die Verarbeitungsmittel entweder auf der elektrischen Ebene und/oder durch geeignete Programmierung exakt auf die angeschlossenen Ventile angepasst werden können, so dass eine besonders effiziente und schnelle Ansteuerung der Ventile ermöglicht wird. Ferner wird durch die Aufteilung in Bewegungsbefehle, Bewegungsprofile und Stellsignale gewährleistet, dass zwischen der Verarbeitungseinrichtung und den Verarbeitungsmitteln ebenfalls nur eine geringe Datenmenge übertragen werden muss, da aufgrund der lokalen Intelligenz in den Verarbeitungsmitteln die notwendigen Berechnungen für die korrekte Ansteuerung der Ventile gemäß den vorgegebenen Bewegungsprofilen unmittelbar vor Ort in den Verarbeitungsmitteln vorgenommen werden können.

In weiterer Ausgestaltung der Erfindung ist vorgesehen, dass der Verarbeitungseinrichtung wenigstens eine externe Sensoreinrichtung zugeordnet ist und dass die Verarbeitungseinrichtung für einen Empfang der Sensorsignale der wenigstens einen externen Sensoreinrichtung über das untergeordnete Buskommunikationssystem und für eine Verarbeitung der Sensorsignale der wenigstens einen externen Sensoreinrichtung ausgebildet ist und dass die Verarbeitungseinrichtung eine Speichereinrichtung umfasst, in der wenigstens ein Regelalgorithmus, insbesondere ein Stellungsregler und/oder ein Druckregler, gespeichert ist. Hierdurch kann die Verarbeitungseinrichtung nicht nur auf Sensorsignale von Sensormitteln, die den Ventileinrichtungen zugeordnet sind, sondern zusätzlich auch auf Sensorsignale von externen Sensoreinrichtungen zugreifen, um die notwendige Koordination der angeschlossenen Ventileinrichtungen vorzunehmen. Beispielhaft kann vorgesehen sein, dass über das untergeordnete Buskommunikationssystem Sensorsignale von externen Sensoreinrichtungen bereitgestellt werden, die nur mittelbar mit der Funktion der Fluidverbraucher, insbesondere der fluidisch betreibbaren Aktoren, verknüpft sind, die ihrerseits mit den Ventileinrichtungen verbunden sind. Die externe Sensoreinrichtung kann beispielsweise als Kamerasystem mit nachgeschalteter Bildverarbeitung ausgebildet sein, die einen Bearbeitungserfolg eines Bearbeitungsschritts, der von wenigstens einem mit einer Ventileinrichtung verbundenen Aktor durchgeführt wird, überprüft und beispielsweise ein Gut/Schlechtsignal bereitstellt. Durch diese Einbeziehung von Signalen externer Sensoreinrichtungen kann die Betriebssicherheit eines Automatisierungssystems, das mit der erfindungsgemäßen Ventilanordnung ausgerüstet wird, erhöht werden. Ferner kann in der Verarbeitungseinrichtung anhand der eintreffenden Sensorsignale eine Regelung für eine Regelgröße, insbesondere für wenigstens einen von der Ventilanordnung bereitgestellten Fluiddruck oder für eine Stellung eines Aktors, vorgenommen werden. Hierzu umfasst die Verarbeitungseinrichtung neben einer Speichereinrichtung zur Speicherung wenigstens eines Regelalgorithmus einen Arbeitsspeicherbereich, in dem der jeweilige Algorithmus unter Einbeziehung der Sensorsignale ablaufen kann und die jeweils erforderliche Stellgröße ermitteln kann, um diese an die jeweils zugeordnete Ventileinrichtung bereitzustellen. Exemplarisch kann der Regelalgorithmus als Druckregler ausgebildet sein, der einen Fluiddruck eines an den Aktor bereitzustellenden Fluids regelt. Alternativ kann der Regelalgorithmus als Stellungsregler ausgebildet sein, mit dessen Hilfe insbesondere eine Ventilstellung oder eine Stellung des Aktors geregelt werden kann.

Besonders vorteilhaft ist es, wenn in der Speichereinrichtung mehrere Regelalgorithmen gespeichert sind, die wahlweise durch eine Benutzereingabe oder durch eine automatische Erkennung von angeschlossenen Ventileinrichtungen und daran angeschlossenen Ventilen durch ein geeignetes Auswahlverfahren ausgewählt und gegebenenfalls parametriert werden können.

Bei einer vorteilhaften Ausgestaltung der Verarbeitungseinrichtung ist vorgesehen, dass Benutzereingaben, die beispielsweise auf die Auswahl und/oder Parametrierung eines Regelalgorithmus gerichtet sind, über das untergeordnete Buskommunikationssystem an die Verarbeitungseinrichtung bereitgestellt werden können. Insbesondere kann vorgesehen sein, dass an einem Busknoten, der das untergeordnete Buskommunikationssystem mit einem übergeordneten Buskommunikationssystem verbindet, ein Eingabegerät wie beispielsweise ein Laptop oder Personal Computer angeschlossen wird, mit dessen Hilfe die gewünschte Reglerauswahl und/oder Parametrierung vorgenommen wird. Besonders vorteilhaft ist es, wenn in dem Busknoten oder alternativ in der Verarbeitungseinrichtung ein Webserver integriert ist, der für eine Bereitstellung einer standardisierten Benutzeroberfläche für die Durchführung der gewünschten Benutzereinstellungen auf dem angeschlossenen Eingabegerät ausgebildet ist.

Bei einer vorteilhaften Weiterbildung der Erfindung ist vorgesehen, dass wenigstens ein fluidischer Aktor mit wenigstens einem der Ventile gekoppelt ist, dass dem Aktor die wenigstens eine Sensoreinrichtung zugeordnet ist und dass die Verarbeitungseinrichtung und/oder die Verarbeitungsmittel zusammen mit den Sensormitteln und/oder den Sensoreinrichtungen eine Regelschleife bilden, um eine Druckregelung zur Beeinflussung einer Stellung des Aktors durchzuführen. Durch die wahlweise oder gemeinsame Einbeziehung von Sensorsignalen der Sensormittel und/oder der Sensoreinrichtungen kann eine Funktion des fluidischen Aktors, der von der Ventilanordnung angesteuert werden soll, entweder indirekt durch die Überwachung von Fluidströmungen, die an den Aktor bereitgestellt werden oder direkt durch Überwachung von tatsächlichen Bewegungen des Aktors oder indirekt durch Überwachung von Bearbeitungsergebnissen, die mit dem Aktor erzielt werden sollen, vorgenommen werden. Die im Rahmen dieser Überwachung gewonnenen Erkenntnisse, die jeweils mit geeigneten Sensormitteln wie beispielsweise Drucksensoren zur Ermittlung eines Fluiddrucks für den Aktor, Positionssensoren für die Ermittlung einer Aktorstellung oder einer Bildverarbeitungseinrichtung zur Ermittlung eines Arbeitsergebnisses ermittelt werden können, werden vorzugsweise als Istwerte für eine Regelschleife eingesetzt, die als Druckregler für den Fluiddruck am Aktor ausgebildet ist. Somit kann besonders flexibel auf unterschiedliche Anforderungen im Automatisierungssystem, das mit der Ventilanordnung ausgerüstet ist, reagiert werden. Besonders vorteilhaft ist es, wenn die Informationen der unterschiedlichen Sensormittel und Sensoreinrichtungen miteinander kombiniert werden, um ein Gesamtbild über die Funktionsweise des Aktors zu erzeugen. Diese Verarbeitung von Sensorsignalen findet vorzugsweise in der Verarbeitungseinrichtung der Steuereinrichtung statt, die entsprechende Rechenkapazität für die Verarbeitung einer Vielzahl von Sensorsignalen aufweist und die auch dazu eingerichtet ist, Sensorsignale der externen Sensoreinrichtungen zu empfangen und zu verarbeiten. Die Sensorsignale der Sensormittel können entweder in den Verarbeitungsmitteln direkt verarbeitet werden und in zusammengefasster Weise an die Verarbeitungseinrichtung übertragen werden oder wahlweise auch als Rohdaten ohne weitere Aufarbeitung direkt von den Verarbeitungsmitteln an die Verarbeitungseinrichtung bereitgestellt werden. In jedem Fall ist vorgesehen, dass mit Hilfe der vorliegenden Sensorsignale eine, insbesondere Positions- oder Geschwindigkeitsregelung der Bewegung des an wenigstens eines der Ventile der Ventilanordnung angeschlossenen fluidischen Aktors vorgenommen wird. Besonders vorteilhaft ist es, wenn unter Berücksichtigung der Sensorsignale der Sensormittel und Sensoreinrichtungen und unter Verwendung der Verarbeitungsmittel und der Verarbeitungseinrichtung mehrere ineinander verschachtelte Regelschleifen für die Regelung der Bewegung des fluidischen Aktors eingesetzt werden. Dies kann beispielsweise durch Kombination einer Druckregelung für die an fluidischen Aktor bereitgestellten Fluidströme, die von den Ventilen bereitgestellt werden, mit einer übergeordneten Positionsregelung für den fluidischen Aktor durchgeführt werden. In der Verarbeitungseinrichtung findet dabei eine Auswertung von Sensorsignalen der Sensormittel und/oder externer Sensoreinrichtungen, insbesondere Positionssensoren, statt. Dabei findet zwischen der Verarbeitungseinrichtung und den Verarbeitungsmitteln ein entsprechender Datenaustausch statt, um beispielsweise die Druckregelung der Verarbeitungsmittel in Abhängigkeit von Anforderungen der Positionsregelung der Verarbeitungseinrichtung zu beeinflussen.

Vorteilhaft ist es, wenn das Verarbeitungsmittel für eine Weiterleitung von verarbeiteten Sensorsignalen der Sensormittel an die Steuereinrichtung ausgebildet ist. Hierdurch kann die Verarbeitungseinrichtung Informationen über die Funktionszustände von Ventilen und damit verbundenen fluidischen Aktoren ermitteln, die an den jeweiligen Ventileinrichtungen angeschlossen sind, und eine Bereitstellung von Bewegungsprofilen an die einzelnen Ventileinrichtungen koordinieren, um zu den gewünschten Bewegungen der anzusteuernden fluidischen Aktoren zu gelangen.

In weiterer Ausgestaltung der Erfindung ist vorgesehen, dass das Verarbeitungsmittel wenigstens ein Ansteuermittel für ein Ventil aufweist, das zur Bereitstellung einer elektrischen Versorgungsenergie, insbesondere einer Versorgungsspannung, an wenigstens ein Ventil ausgebildet ist. Bei dem Ansteuermittel kann es sich beispielsweise um eine elektrische Endstufe handeln, die mit Hilfe von Stellsignalen, insbesondere elektrischen Steuerspannungen, angesteuert wird, um eine vom jeweiligen Ventil benötigte elektrische Leistung bedarfsabhängig freizugeben. Vorzugsweise handelt es sich bei dem jeweiligen Stellsignal um ein analoges Ausgangssignal, das von dem, insbesondere als Mikrocontroller ausgebildeten, Verarbeitungsmittel bereitgestellt wird. Vorzugsweise ist das Ventil als Piezoventil ausgebildet, das mit Hilfe einer elektrischen Versorgungsspannung zwischen einer Schließstellung und einer Öffnungsstellung einstellbar ist und hierzu einen durch die Versorgungsspannung geometrisch veränderlichen, zumindest teilweise aus piezoelektrischem Material hergestellten Biegebalken aufweist.

In weiterer Ausgestaltung der Erfindung ist vorgesehen, dass am ersten Anschlussmittel mehrere, insbesondere acht, unabhängig voneinander ansteuerbare Ventile, insbesondere Piezoventile, angeschlossen sind, die als pneumatische Vorsteuerventile dienen und dass die Ventile mit, insbesondere vier, pneumatisch ansteuerbaren Hauptventilen gekoppelt sind, die für eine Fluidbereitstellung an, insbesondere zwei, Arbeitsanschlüssen ausgebildet sind. Somit bildet die Ventilanordnung zusammen mit den daran angeschlossenen, insbesondere als Piezoventile ausgeführten, Ventilen und Hauptventilen vorzugsweise eine fluidische Vollbrückenschaltung, mit der je nach entsprechender Ansteuerung der Ventile und der daraus resultierender fluidischer Ansteuerung der Hauptventile an den Arbeitsanschlüssen eine Vielzahl von unterschiedlichen Ventilkonfigurationen wie beispielsweise 2/2-Wegeventile, 3/2-Wegeventile, 5/2-Wegeventile, nachgebildet werden können. Dabei können die Vorsteuerventile und/oder die Hauptventile als Proportionalventile ausgebildet sein oder als Schaltventile ausgebildet sein, die durch geeignete Weise in der Art von Proportionalventilen betrieben werden. Dies gilt insbesondere dann, wenn am ersten Anschlussmittel acht unabhängig voneinander ansteuerbare Piezoventile angeschlossen sind und die Piezoventile jeweils paarweise für eine fluidische Vorsteuerung von insgesamt vier pneumatisch ansteuerbaren Hauptventilen vorgesehen sind.

Zweckmäßig ist es, wenn wenigstens einem Arbeitsanschluss ein mit dem zweiten Anschlussmittel der Ventileinrichtung verbundener Drucksensor zugeordnet ist und/oder wenn wenigstens einem Hauptventil ein Positionssensor zur Ermittlung der Ventilstellung des Hauptventils zugeordnet ist. Mit diesen Sensormitteln, die als Drucksensor und/oder als Positionssensor ausgebildet sein können, kann das Verarbeitungsmittel eine Druckregelung für eine fluidische Ansteuerung des Hauptventils und/oder eine Positionsregelung für das Hauptventil verwirklichen. Hierbei kann vorzugsweise vorgesehen sein, dass die Sensormittel direkt, also ohne Zwischenschaltung von komplexen Bussystemen, mit den Verarbeitungsmitteln gekoppelt sind und die Verarbeitungsmittel dazu eingerichtet sind, die üblicherweise als elektrische Signalpegel auftretenden Sensorsignale zu verarbeiten, insbesondere zu digitalisieren und in entsprechender Weise, vorzugsweise unter Verwendung von gespeicherten Programmen in einem Mikrocontroller zu verarbeiten.

Bevorzugt ist vorgesehen, dass die Steuereinrichtung und/oder die Ventileinrichtung einen Umgebungsdrucksensor und/oder einen Versorgungsdrucksensor umfasst und dass die Verarbeitungseinrichtung für einen Empfang eines Sensorsignals des Umgebungsdrucksensors und/oder eines Sensorsignals des Versorgungsdrucksensors ausgebildet ist. Durch die Kenntnis des Umgebungsdrucks sowie des Versorgungsdrucks, der für die Bereitstellung an die Ventile der Ventileinrichtung vorgesehen ist, kann die Steuereinrichtung in präziser und effizienter Weise die Sensorsignale von Drucksensoren auswerten, die der Ventileinrichtung zugeordnet sind. Vorzugsweise sind die Drucksensoren als Absolutdrucksensoren ausgebildet, wodurch eine besonders kompakte Bauform für diese Drucksensoren gewählt werden kann, so dass diese besonders vorteilhaft den jeweiligen Ventilen zugeordnet werden können. Wahlweise kann vorgesehen sein, dass die Sensorsignale des Umgebungsdrucksensors und/oder des Versorgungsdrucksensors in der Steuereinrichtung verarbeitet und an die Ventileinrichtung bereitgestellt werden oder dass die in der Steuereinrichtung verarbeiteten Signale des Umgebungsdrucksensors und/oder des Versorgungsdrucksensors mit den Sensorsignalen der Sensoren, die der Ventileinrichtung zugeordnet sind, in der Steuereinrichtung verarbeitet werden.

Die Aufgabe der Erfindung wird gemäß einem zweiten Aspekt durch ein fluidisches System gelöst, wie es im Anspruch 13 angegeben ist. Hierbei ist vorgesehen, dass das fluidische System eine Steuerungseinrichtung umfasst, die für eine Bereitstellung von Bewegungsbefehlen an ein übergeordneten Buskommunikationssystem ausgebildet ist, mit einem übergeordneten Buskommunikationssystem, das für eine Datenkommunikation zwischen der Steuerungseinrichtung und wenigstens einer Ventilanordnung nach einem der Ansprüche 1 bis 12, die mit dem Buskommunikationssystem verbunden ist, ausgebildet ist. Hierbei umfasst die Ventilanordnung die Funktion einer bidirektionalen Umsetzung von Busbefehlen, die über das übergeordnete Buskommunikationssystem bereitgestellt werden, in Steuerbefehle sowie von Zustandsinformationen, insbesondere Sensorsignalen, von Ventileinrichtungen, die Bestandteil der Ventilanordnung sind , in Busbefehle zur Weiterleitung an die Steuerungseinrichtung.

Bei einer Weiterbildung des fluidischen Systems ist vorgesehen, dass zwischen dem übergeordneten Buskommunikationssystem und der Steuerungseinrichtung ein Buskoppler angeordnet ist, der für eine bidirektionale Umsetzung von Busbefehlen zwischen dem übergeordneten Buskommunikationssystem und einem untergeordneten Buskommunikationssystem ausgebildet ist, wobei das untergeordnete Buskommunikationssystem zwischen dem Buskoppler und der Steuerungseinrichtung ausgebildet ist. Der Buskoppler ist vorzugsweise austauschbar ausgebildet, so dass eine Anpassung der Ventilanordnung an unterschiedlich ausgebildete übergeordnete Buskommunikationssysteme durch eine Ankopplung eines entsprechend ausgeführten Buskopplers an die Steuereinrichtung vorgenommen werden kann.

Bei einer Weiterbildung des fluidischen Systems ist vorgesehen, dass wenigstens ein Aktor mit der Ventilanordnung fluidisch verbunden ist, dass wenigstens eine Eingangs-/Ausgangseinrichtung mit dem Buskommunikationssystem verbunden ist und dass dem Aktor wenigstens ein Positionssensor zugeordnet ist, der elektrisch mit der Eingangs-/Ausgangseinrichtung verbunden ist, um eine Bereitstellung eines Positionssignals an die Verarbeitungseinrichtung zu ermöglichen.

Bei einer vorteilhaften Weiterbildung der Erfindung ist vorgesehen, dass die Ventilanordnung ein Ventilgehäuse umfasst, in dem Ventilschächte zur paarweisen Aufnahme von Ventilpatronen ausgebildet sind, sowie mit Ventilpatronen, die in den Ventilschächten angeordnet sind, wobei die Ventilschächte zusammen mit den darin aufgenommenen Ventilpatronen jeweils einen Druckraum begrenzen, der in fluidisch kommunizierender Verbindung mit einem zugeordneten Eingangsanschluss steht und wobei die Ventilpatronen jeweils zwei elektrisch ansteuerbare Ventile umfassen, die jeweils dazu ausgebildet sind, einen freien Strömungsquerschnitt zwischen dem Druckraum und einem dem jeweiligen Ventil zugeordneten Ausgangsanschluss zu beeinflussen.

Vorteilhafte Ausführungsformen der Erfindung sind in der Zeichnung dargestellt. Herbei zeigt:
- Figur 1: eine schematische Darstellung eines fluidischen Systems mit einer übergeordneten Steuerungseinrichtung, einem übergeordneten und einem untergeordneten Buskommunikationssystem und einer Ventilanordnung, die eine Steuereinrichtung und eine Ventileinrichtung umfasst, sowie mehreren Aktoren und zugeordneten Sensoren,
- Figur 2: eine Ausschnittdarstellung der Figur 1 mit einer alternativen Ankopplung der Ventilanordnung an das übergeordnete Buskommunikationssystem,
- Figur 3: eine schematische Darstellung einer Ventilanordnung, die acht unabhängig voneinander ansteuerbare Piezoventile und vier von den Piezoventilen pneumatisch ansteuerbare Hauptventile umfasst,
- Figur 4: eine perspektivische Darstellung einer konkreten Ausführungsform der in der Figur 3 dargestellten Ventilanordnung, und
- Figur 5: eine ebene, schematische Detaildarstellung eines Sensormittels aus der Figur 4.

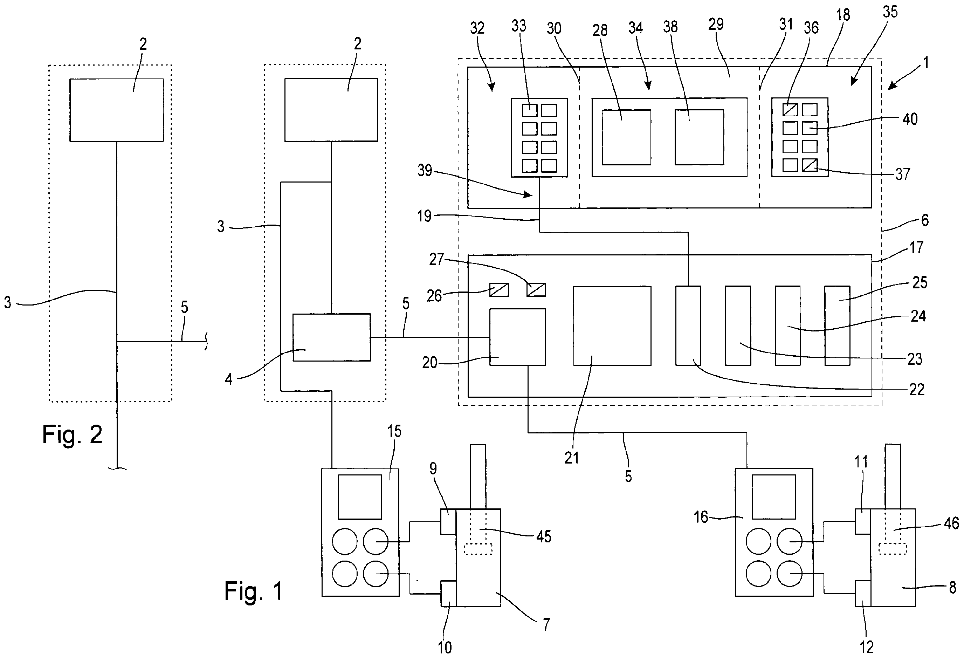

Ein schematisch in der Figur 1 dargestelltes fluidisches System 1 umfasst eine übergeordnete Steuerungseinrichtung 2, ein übergeordnetes Buskommunikationssystem 3, einen Buskoppler 4, ein untergeordnetes Buskommunikationssystem 5, eine Ventilanordnung 6 sowie mehrere Aktoren 7, 8, den Aktoren 7, 8 zugeordnete externe Sensoreinrichtungen 9 bis 12 sowie Eingangs-/Ausgangsmodule 15, 16.

Ein derartiges fluidisches System 1 kann beispielsweise in einer nicht näher dargestellten komplexen Bearbeitungsmaschine für Automatisierungszwecke eingesetzt werden, beispielsweise um nicht dargestellte Werkstücke mit Hilfe der Aktoren 7, 8 zeitweilig zu spannen oder zu transportieren. Um die einzelnen Abläufe in einer derartigen Bearbeitungsmaschine zu koordinieren, ist eine beispielsweise als speicherprogrammierbare Steuerung (SPS) ausgebildete übergeordnete Steuerungseinrichtung 2 vorgesehen, die mit einem übergeordneten Buskommunikationssystem 3 verbunden ist, um mit einer Vielzahl von Busteilnehmern kommunizieren zu können. Bei den Busteilnehmern handelt es sich beispielsweise um eine nicht dargestellte Motorsteuerung zur Ansteuerung ebenfalls nicht dargestellter elektrischer Antriebsmotoren oder um Buskoppler 4, die für eine Einbindung komplex aufgebauter Subkomponenten wie beispielsweise der Ventilanordnung 6 in das fluidische System 1 ausgebildet sind. Derartige komplexe Subkomponenten können mit einem eigenständigen, vom Buskommunikationsprotokoll des übergeordneten Buskommunikationssystems 3 unabhängigen internen Buskommunikationsprotokoll arbeiten, um eine Vielzahl von Busteilnehmern innerhalb des untergeordneten Buskommunikationssystems 5 ansprechen zu können. Während es sich bei dem übergeordneten Buskommunikationssystem 3 typischerweise um ein Feldbussystem nach einem der üblichen Feldbusstandards handelt, ist das untergeordnete Buskommunikationssystem 5 typischerweise ein proprietäres, individuell auf die Bedürfnisse der Busteilnehmer des untergeordneten Buskommunikationssystem 5 abgestimmtes Buskommunikationsprotokoll.

Vorliegend ist aus Gründen der zeichnerischen Vereinfachung an das untergeordnete Buskommunikationssystem 5 lediglich ein einziger als Ventilanordnung 6 ausgebildeter Busteilnehmer angeschlossen, dessen Aufbauweise und Funktionsweise nächstehend näher erläutert werden soll. Die Ventilanordnung 6 umfasst eine Steuereinrichtung 17 sowie eine Ventileinrichtung 18. Exemplarisch ist vorgesehen, dass die Steuereinrichtung 17 und die Ventileinrichtung 18 baulich getrennt voneinander ausgebildet sind und in nicht näher dargestellten Gehäusen aufgenommen sind. Dabei dient die Steuereinrichtung 17 zur Ansteuerung mehrerer Ventileinrichtungen 18, von denen aus Gründen der Übersichtlichkeit jedoch lediglich eine dargestellt ist. Zwischen der Steuereinrichtung 17 und der Ventileinrichtung 18 ist eine Kommunikationsverbindung vorgesehen, die exemplarisch mittels eines Verbindungskabels 19 realisiert ist. Die Kommunikationsverbindung kann beispielsweise als digitale, serielle Datenkommunikation, insbesondere nach dem SPI-Standard (Serial Peripheral Interface) für eine bidirektionale Kommunikation zwischen der Steuereinrichtung 17 und der Ventileinrichtung 18 ausgebildet sein.

Die Steuereinrichtung 17 ist als elektronische Schaltung ausgebildet und weist mehrere elektronische Komponenten auf, die auf einer gedruckten Schaltung oder Leiterplatte angeordnet sind. Die nachstehend näher beschriebenen elektronischen Komponenten sind für den Funktionsumfang der Steuereinrichtung 17 von wesentlicher Bedeutung, weitere nachstehend nicht näher beschriebene elektronische und elektrische Komponenten dienen als Peripherie und stellen beispielsweise die elektrische Versorgung und die interne und externe elektronische Kommunikation der nachstehend beschriebenen elektronischen Komponenten sicher. Exemplarisch ist vorgesehen, dass die Steuereinrichtung 17 einen elektronischen Kommunikationsbaustein 20 als Busschnittstelle umfasst, der für einen Empfang, eine Verarbeitung und eine Weiterleitung von Daten vorgesehen ist, die über das untergeordnete Buskommunikationssystem 5 bereitgestellt werden. Hierzu ist der Kommunikationsbaustein 20 exemplarisch sowohl mit dem Buskoppler 4 als auch mit dem Eingangs-/Ausgangsmodul 16 verbunden, das für einen Anschluss an das untergeordnete Buskommunikationssystem 5 ausgebildet ist. Der elektronische Kommunikationsbaustein 20 kann über das untergeordnete Buskommunikationssystem 5 eintreffende Daten daraufhin untersuchen, ob diese Daten gegebenenfalls für die Steuereinrichtung 17 bestimmt sind. Ferner kann der elektronische Kommunikationsbaustein 20 Daten an das untergeordnete Buskommunikationssystem 5 ausgeben, um beispielsweise Zustandsmeldungen über die Funktion der Steuereinrichtung 17 und damit verbundener Komponenten an die Steuerungseinrichtung 2 zu übertragen. Ferner kann vorgesehen sein, dass der elektronische Kommunikationsbaustein 20 auch Daten an andere Teilnehmer des untergeordneten Buskommunikationssystems 5 weitergeben kann, die für eine Beeinflussung, insbesondere Steuerung oder Parametrierung dieser weiteren Buskommunikationsteilnehmer vorgesehen sind. Sofern der Kommunikationsbaustein 20 aus Daten, die über das untergeordnete Buskommunikationssystem 5 eintreffen, Informationen entnehmen kann, die an die Steuereinrichtung 17 gerichtet sind, kann er diese Informationen an eine Verarbeitungseinrichtung 21 weiterleiten.

Exemplarisch ist die Verarbeitungseinrichtung 21 als Recheneinheit, insbesondere in Form eines Mikrocontrollers oder Mikroprozessors, ausgebildet und umfasst eine nicht näher dargestellte Speichereinrichtung. Die Aufgabe der Verarbeitungseinrichtung 21 besteht darin, Daten zu verarbeiten, die zum einen vom elektronischen Kommunikationsbaustein 20 bereitgestellt werden und die zum anderen von Anschlusseinrichtungen 22 - 25 und daran angeschlossenen Ventileinrichtungen 18 bereitgestellt werden. Eine wesentliche Aufgabe der Verarbeitungseinrichtung 21 besteht darin, aus den über das untergeordnete Buskommunikationssystem 5 übertragenen und vom Kommunikationsbaustein 20 bereitgestellten Daten Bewegungsbefehle zu isolieren, die eine konkrete Bewegung eines Aktors 8 beschreiben, der von der Ventileinrichtung 18 angesteuert werden soll. Bei Eintreffen eines derartigen Bewegungsbefehls ist vorgesehen, dass die Verarbeitungseinrichtung 21 zunächst den gegenwärtigen Status des Aktors 8 bestimmt. Dies erfolgt beispielsweise darüber, dass Sensorsignale von externen Sensoreinrichtungen sowie von Sensormitteln, die der Ventileinrichtung 18 zugeordnet sind, in der Verarbeitungseinrichtung 21 verarbeitet werden.

Ausgehend von dieser Bestimmung des aktuellen Zustands des angeschlossenen Aktors 8 kann die Verarbeitungseinrichtung 21 in einem nachgelagerten Arbeitsschritt ein Bewegungsprofil für den angeschlossenen Aktor 8 erstellen, das anschließend an die wenigstens eine Ventileinrichtung 18 bereitgestellt wird. Bei dem Bewegungsprofil handelt es sich beispielsweise um eine konkrete Vorgabe für einen zeitlichen Bewegungsablauf des angeschlossenen Aktors 8, die in der Ventileinrichtung 18 in Stellsignale zur Freigabe der entsprechenden Fluidströme umgesetzt wird, die von den einzelnen an die Ventileinrichtung 18 angeschlossenen Ventilen freigegeben und dem Aktor 8 zur Verfügung gestellt werden sollen. Vorzugsweise ist in der nicht dargestellten Speichereinrichtung der Verarbeitungseinrichtung 21 wenigstens ein Regelalgorithmus abgelegt, mit dessen Hilfe eine Regelung des Aktors 8, insbesondere eine Stellungsregelung, vorgenommen werden kann. Dabei kann der wenigstens eine gespeicherte Regelalgorithmus vorzugsweise parametriert werden, um ihn an die Eigenschaften des angeschlossenen Aktors 8 anzupassen. Hierfür kann die Verarbeitungseinrichtung 21 über das untergeordnete Buskommunikationssystem 5 mit Hilfe des elektronischen Kommunikationsbausteins 20 und des Buskopplers 4 über ein geeignetes Eingabegerät angesprochen werden, das an den Buskoppler 4 angeschlossen wird. Bei dem Eingabegerät handelt es sich beispielsweise um einen Personal Computer, insbesondere um einen Laptop. Besonders vorteilhaft ist es, wenn der Buskoppler 4 und/oder die Verarbeitungseinrichtung 21 einen Webbrowser umfassen, der gemäß einem vorgegebenen Protokoll eine Bedienoberfläche für das angeschlossene Eingabegerät, insbesondere in Form einer Eingabemaske für die fraglichen Parameter, bereitstellt.

Ferner umfasst die Steuereinrichtung 17 wenigstens einen Drucksensor, insbesondere einen Versorgungsdrucksensor 26 und einen Umgebungsdrucksensor 27. Der Versorgungsdrucksensor 26 ist in nicht näher dargestellter Weise mit einer fluidischen Versorgungsleitung verbunden, die für eine Bereitstellung von Fluidströmen an die nicht dargestellten Ventile vorgesehen ist, die mit der Ventileinrichtung 18 verbunden sind. Der Umgebungsdrucksensor 27 hat die Aufgabe, einen Umgebungsdruck in der Umgebung der Steuereinrichtung 17 zu ermitteln. Exemplarisch ist vorgesehen, dass der Versorgungsdrucksensor 26 und der Umgebungsdrucksensor 27 als Absolutdrucksensoren ausgebildet sind, so dass eine Druckmessung gegenüber einem internen Vakuum im jeweiligen Drucksensor durchgeführt wird. Dies ist insbesondere dann von Vorteil, wenn auch die Ventileinrichtung 18 mit nachstehend noch näher beschriebenen Absolutdrucksensoren bestückt ist.

Die ebenfalls in der Figur 1 schematisch dargestellte Ventileinrichtung 18 umfasst als zentrale Komponente ein als Recheneinheit, insbesondere Mikrocontroller oder Mikroprozessor, ausgebildetes Verarbeitungsmittel 28, das auf einer gedruckten Schaltung 29 angeordnet ist. Exemplarisch ist die gedruckte Schaltung 29 als Leiterplatte mit nicht näher dargestellten elektrischen Leiterbahnen aus einem flexiblen Materialverbund hergestellt und kann daher beispielsweise an den Biegekanten 30 und 31 jeweils um 90 Grad abgeknickt werden, um eine vorteilhafte Integration in ein nachstehend näher beschriebenes Ventilmodul zu gewährleisten. Durch die vorgesehenen Biegekanten 30 und 31 wird die gedruckte Schaltung 29 in drei Bereiche 32, 34, 35 unterteilt, wobei auch eine andere Aufteilung gewählt werden kann oder auf eine Biegung der gedruckten Schaltung 29 verzichtet werden kann. Exemplarisch ist im ersten Bereich 32 der gedruckten Schaltung ein Anschlussbereich ausgebildet, der mehrere elektrisch leitende Anschlusskontakte 33 umfasst, die für eine elektrische Verbindung mit nicht dargestellten Ventilen vorgesehen sind. Im zweiten Bereich ist das Verarbeitungsmittel 28 mit einer nicht näher dargestellten elektrischen und gegebenenfalls elektronischen Peripherie angeordnet, wobei es sich bei dieser Peripherie insbesondere um elektrische und elektronische Bauelemente wie Widerstände, Kondensatoren oder integrierte Schaltkreise handeln kann. Exemplarisch ist im zweiten Bereich 34 auch eine elektrische Endstufenanordnung 38 vorgesehen, die elektrisch mit dem Verarbeitungsmittel 28 gekoppelt ist und die bei Beaufschlagung mit elektrischen Signalen durch das Verarbeitungsmittel 28 entsprechende elektrische Leistung an die jeweiligen Anschlusskontakte 33 bereitstellen kann, um die damit verbundenen, nicht dargestellten Ventile, elektrisch anzusteuern.

Im dritten Bereich 35 der gedruckten Schaltung 29 sind zwei Drucksensoren 36, 37 angeordnet, die vorzugsweise als Absolutdrucksensoren ausgebildet sind und die für eine Ermittlung eines Fluiddrucks, insbesondere an einem Arbeitsausgang eines Ventilmoduls, ausgebildet sind. Ferner sind im dritten Bereich 35 elektrische Anschlüsse 40 für nicht näher dargestellte Positionssensoren vorgesehen, mit denen beispielsweise die Position von pneumatisch vorgesteuerten Hauptventilen ermittelt werden kann.

Die Verarbeitungsmittel 28 sind für eine Kommunikation mit der Verarbeitungseinrichtung 21 über eine leitergebundene, exemplarisch kabelgebundene, Kommunikationsverbindung 39 ausgebildet. Die Kommunikationsverbindung 39 ist über das Verbindungskabel 19 an eine der Anschlusseinrichtungen 22 - 25 der Steuereinrichtung 17 geführt. Vorzugsweise wird die Kommunikationsverbindung 39 gemäß dem SPI-Protokoll bidirektional zwischen Verarbeitungsmitteln 28 und Verarbeitungseinrichtung 21 durchgeführt. Dabei können die Verarbeitungsmittel 28 insbesondere Steuerbefehle der Verarbeitungseinrichtung 21 empfangen, um diese lokal vor Ort durch entsprechende Verarbeitung, insbesondere unter Verwendung von gespeicherten oder fest einprogrammierten Algorithmen, in Stellsignale für die an den Anschlusskontakten 33 angeschlossenen, nicht dargestellten Ventile umzusetzen. Ferner sind die Verarbeitungsmittel 28 für eine Verarbeitung von Sensorsignalen, die von den Drucksensoren 36 und 37 sowie von den nicht dargestellten Positionssensoren, die an den elektrischen Anschlüssen 40 angeschlossen sind, bereitgestellt werden, ausgebildet. Hierdurch kann beispielsweise eine Druckregelung für die Ventile auf Basis der Signale der Drucksensoren 36 und 37 und/oder eine Positionsregelung für die Ventile auf Basis der Signale der an den elektrischen Anschlüssen 40 angeschlossenen Positionssensoren durch die Verarbeitungsmittel 28 durchgeführt werden, die in einer entsprechenden Ansteuerung der an den Anschlusskontakten 33 angeschlossenen, nicht dargestellten Ventile resultiert.

Die von den angeschlossenen Sensoren, insbesondere den Drucksensoren 36, 37 und den Positionssensoren an den Anschlüssen 40 bereitgestellten Sensorsignale können neben der unmittelbaren Verarbeitung im Verarbeitungsmittel 28 auch als Rohdaten oder Rohsignale über die Kommunikationsverbindung 39 an die Verarbeitungseinrichtung 21 bereitgestellt werden. Die Verarbeitungseirichtung 21 ist derart ausgebildet, dass sie auf Basis derartiger Rohdaten oder Rohsignale, gegebenenfalls unter Verknüpfung mit Sensorsignalen externer Sensoreinrichtungen 9, 10, die über das untergeordnete Buskommunikationssystem 5 bereitgestellt werden, ebenfalls Regelalgorithmen anwenden kann, um beispielsweise eine Positionsregelung für einen der angeschlossenen Aktoren 7 oder 8 vorzunehmen. Dabei sind exemplarisch sowohl am Aktor 7 als auch am Aktor 8 die Positionssensoren 9 bis 12 angeordnet, die jeweils exemplarisch zur Ermittlung einer Position eines Kolbens 45 bzw. 46 der als Pneumatikzylinder ausgebildeten Aktoren 7,8 vorgesehen sind. Dabei sind die Positionssensoren 9 und 10 über ein externes Eingangs-/Ausgangsmodul 15 mit dem übergeordneten Buskommunikationssystem 3 gekoppelt. Dementsprechend werden die Positionssignale dieser Positionssensoren 9 und 10 über das übergeordnete Buskommunikationssystem 3, den Buskoppler 4 und das untergeordnete Buskommunikationssystem 5 sowie den Kommunikationsbaustein 20 an die Verarbeitungseinrichtung 21 übertragen. Die Positionssensoren 11 und 12 sind hingegen mit dem internen Eingangs-/Ausgangsmodul 16 verbunden, das über das untergeordnete Buskommunikationssystem 5 direkt mit dem Kommunikationsbaustein 20 kommuniziert, wodurch eine besonders geringe Signallaufzeit zwischen den Sensoren und der Verarbeitungseinrichtung 21 gewährleistet werden kann.

In der Figur 2 ist eine alternative Anschlussweise für die Ventilanordnung 6 vorgesehen, bei der eine unmittelbare Kommunikation zwischen der Steuerungseinrichtung 2, der Ventilanordnung 6 und dem Eingangs-/Ausgangsmodul 15 vorgesehen ist. Hierzu ist es vorgesehen, den elektronischen Kommunikationsbaustein 20 gemäß der Figur 1 derart abzuändern, dass eine direkte Kommunikation zwischen der Steuerungseinrichtung 2 und der Ventilanordnung 6 ermöglicht wird. Diese Aufbauweise ist zu bevorzugen, wenn keine Variabilität für das fluidische System hinsichtlich der Auswahl des Buskommunikationsprotokolls notwendig ist, sondern die Ventilanordnungen 6 stets an das gleiche übergeordnete Buskommunikationssystem 3 angeschlossen werden.

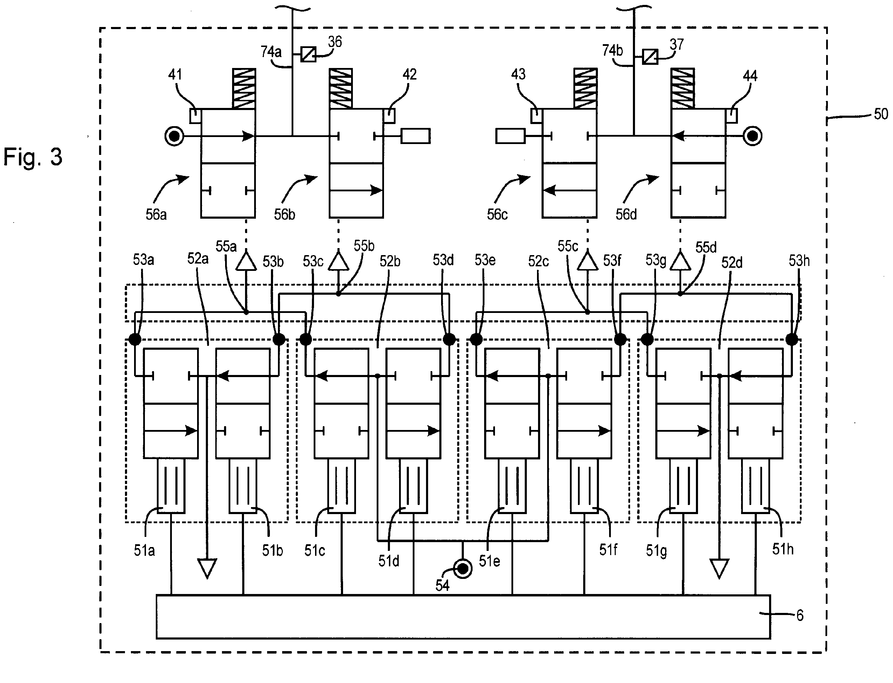

In der Figur 3 ist ein exemplarischer Anwendungsfall für eine in der Figur 1 dargestellte Ventilanordnung 6 dargestellt. Die Ventilanordnung 6 ist mit einer Ventilscheibe 50 elektrisch verbunden und zur elektrischen Ansteuerung von exemplarisch acht Piezoventilen 51a bis 51h vorgesehen. Die Piezoventile 51a bis 51h sind jeweils in nicht näher dargestellter Weise mit den in Figur 1 dargestellten Anschlusskontakten 33 der Ventilanordnung 6 elektrisch verbunden und können somit durch die Verarbeitungsmittel 28 individuell mit elektrischer Energie versorgt werden. Exemplarisch ist bei der Ausführungsform gemäß der Figur 3 vorgesehen, dass jeweils zwei der Piezoventile 51a bis 51h in einem gemeinsamen Aufnahmeschacht 52a bis 52d untergebracht sind, wobei in jedem der Aufnahmeschächte 52a bis 52d ein vorgebbares pneumatisches Druckniveau vorliegt, das von den jeweils in dem entsprechenden Aufnahmeschacht 52a bis 52d untergebrachten Piezoventilen 51a bis 51h zur Bereitstellung an Anschlussstellen 53a bis 53h freigegeben werden kann. Dabei sind die Aufnahmeschächte 52b und 52c für eine Beaufschlagung mit einem Versorgungsdruck vorgesehen, der von einer pneumatischen Quelle 54 bereitgestellt wird. Die beiden Aufnahmeschächte 52a und 52d sind hingegen kommunizierend mit dem Umgebungsdruck verbunden und dienen der Abfuhr von druckbeaufschlagtem Fluid. Vorzugsweise sind eine erste Anschlussstelle 53a mit einer dritten Anschlussstelle 53c und eine zweite Anschlussstelle 53b mit einer vierten Anschlussstelle 53d pneumatisch verbunden und bilden jeweils einen Arbeitsanschluss 55a bzw. 55b. Ferner sind eine fünfte Anschlussstelle 53e mit einer siebten Anschlussstelle 53g und eine sechste Anschlussstelle 53f mit einer achten Anschlussstelle 53h pneumatisch verbunden und bilden jeweils einen Arbeitsanschluss 55c bzw. 55d. Somit kann an den Arbeitsanschlüssen 55a bis 55d wahlweise ein Versorgungsdruck oder ein Umgebungsdruck angelegt werden.

Die Arbeitsanschlüsse 55a bis 55d sind exemplarisch jeweils mit pneumatisch vorgesteuerten Hauptventilen 56a bis 56d verbunden, um diese exemplarisch als 2/2-Wegeventil ausgeführten Hauptventile 56a bis 56d wahlweise zwischen einer ersten und einer zweiten Schaltstellung zu schalten und hierdurch eine wahlweise Bereitstellung bzw. Abführung von druckbeaufschlagtem Fluid zu einem bzw. von einem nicht dargestellten fluidischen Verbraucher zu ermöglichen, der an Ausgangsanschlüssen 74a, 74b angeschlossen werden kann.

Exemplarisch ist vorgesehen, dass jedem der Arbeitsanschlüsse 74a, 74b jeweils ein Drucksensor 36 bzw. 37 zugeordnet ist, um dem Verarbeitungsmittel 28 der Ventileinrichtung 18 elektrische Drucksignale über die jeweils an den Arbeitsanschlüssen 74a, 74b anliegenden Druckniveaus geben zu können. Ferner ist jedem der Hauptventile 56a bis 56d ein Positionssensor 41 bis 44 zugeordnet, der für eine Ermittlung einer Schaltstellung des jeweiligen Hauptventils 56a bis 56d ausgebildet ist. Bei einer anderen, nicht dargestellten Ausführungsform können die pneumatisch vorgesteuerten Hauptventile in anderen Schaltkonfigurationen, insbesondere als 3/2-Wegeventile, als 5/2-Wegeventeile oder als Proportionalventile ausgebildet sein.

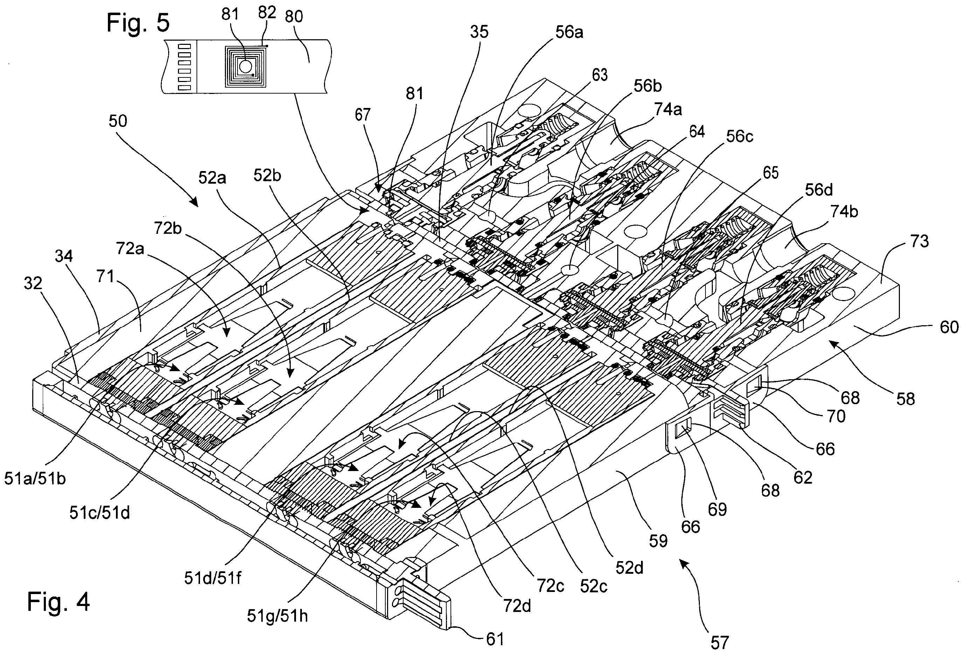

Die Figur 4 zeigt eine praktische Ausführungsform der in Figur 3 dargestellten Ventilscheibe 50, deren mechanische und fluidische Aufbauweise aus der EP 2 549 125 A1 bekannt ist, die hiermit vollumfänglich mit einbezogen wird, wobei nachfolgend der Übersicht wegen eine Zusammenfassung der wesentlichen Elemente der bekannten Ventilscheibe erfolgt. Hierbei sind die in der EP 2 549 125 A1 verwendeten Bezugszeichen an die Bezugszeichen der vorliegenden Figurenbeschreibung angepasst.

Die Ventilscheibe 50 umfasst ein Ventilmodul 57 und ein Hauptventilmodul 58, die beide exemplarisch quaderförmig ausgebildet sind. An Schmalseiten 59, 60 der Ventilscheibe 50 ragen jeweils als Flachstecker 61, 62 ausgebildete Kontaktmittel ab, wobei der Flachstecker 61 elektrisch dem Ventilmodul 57 und der Flachstecker 62 elektrisch dem Hauptventilmodul 58 zugeordnet ist. Das Hauptventilmodul 58 wird von mehreren, normal zur Schnittebene der Darstellung gemäß der Figur 4 ausgerichteten Ausnehmungen 63, 64, 65 durchsetzt, die bei einer Aneinanderreihung mehrerer Ventilscheiben 50 durchgehende Kanäle für eine Fluidversorgung und Fluidentsorgung für die Hauptventile 56a bis 56 d ausgebildet sind. In gleicher Weise wird das Ventilmodul 57 von Ausnehmungen durchsetzt, die für eine fluidische Versorgung und Entsorgung der Piezoventile 51a bis 51h vorgesehen sind und die in der Figur 4 nicht erkennbar sind.

Das Ventilmodul 57 ist mit dem Hauptventilmodul 58 durch elastische Riegelzungen 66 verbunden, die an einem zwischen dem Ventilmodul 57 und dem Hauptventilmodul 58 angeordneten Verbindungsteil 67 ausgebildet sind. Die Riegelzungen 66 weisen Ausnehmungen 68 auf, die an Riegelvorsprünge 69, 70 am Ventilmodul 57 und am Hauptventilmodul 58 angepasst sind und die eine formschlüssige Kopplung mit diesen Riegelvorsprüngen 69, 70 ausgebildet sind. Das Verbindungsteil 67 dient neben der mechanischen Kopplung des Hauptventilmoduls 58 mit dem Ventilmodul 57 auch der elektrischen Ankopplung der dem Hauptventilmodul 58 zugeordneten, in der Figur 5 schematisch näher dargestellten Positionssensoren mit den in Figur 4 nicht näher dargestellten Verarbeitungsmitteln 28 gemäß der Figur 3. Ergänzend können Signale der Positionssensoren an dem Flachstecker 62 bereitgestellt werden. In dem Verbindungsteil 67 ist vorzugsweise der dritte Bereich 35 der in Figur 1 dargestellten gedruckten Schaltung 29 mit den elektrischen Anschlüssen 40 angeordnet, um eine einfache elektrische Ankopplung der Positionssensoren an die Verarbeitungsmittel 28 zu gewährleisten.

An der dem Hauptventilmodul 58 abgewandten Schmalseite des Ventilmoduls 57 ist der erste Bereich 32 der in Figur 1 dargestellten gedruckten Schaltung 29 mit den elektrisch leitenden Anschlusskontakten 33 für die elektrische Versorgung der Piezoventile 51a bis 51h angeordnet. Zwischen dem ersten Bereich 32 und dem dritten Bereich 35 erstreckt sich der zweite Bereich 34 der gedruckten Schaltung 29, wodurch eine kompakte Integration der gedruckten Schaltung 29 in das Ventilmodul 57 ermöglicht wird. Exemplarisch ist vorgesehen, dass die drei Bereiche 32, 34 und 35 der gedruckten Schaltung mit flexiblen Schaltungsabschnitten, so genannten "Flex-Prints", elektrisch und mechanisch miteinander verbunden sind. Mit dem Flachstecker 61 kann die Ventilanordnung mit einem nicht dargestellten Buskoppler für eine Kommunikation mit einer ebenfalls nicht dargestellten Steuerungseinrichtung verbunden werden.

Aus der Schnittdarstellung gemäß der Figur 4 geht die Aufbauweise des Ventilmoduls 57 und des Hauptventilmoduls 58 näher hervor. In einem Ventilgehäuse 71 des Ventilmoduls 57 sind exemplarisch vier Ventilpatronen 72a bis 72d in Aufnahmeschächten 52a bis 52d aufgenommen, wobei jede der Ventilpatronen 72a bis 72d jeweils zwei Piezoventile 51a bis 51h umfasst.

Im Hauptventilgehäuse 73 sind exemplarisch vier Hauptventile 56a bis 56d angeordnet, die für eine wahlweise Bereitstellung eines Versorgungsdrucks oder eines Umgebungsdrucks an den Ausgangsanschlüssen 74a, 74b ausgebildet sind.

In der schematischen Darstellung der Figur 5 ist ein Abschnitt 80 des als Leiterplatte ausgebildeten dritten Bereichs 35 der gedruckten Schaltung 29 in ebener Darstellung gezeigt. Dieser Abschnitt 80 wird von einer Bohrung 81 durchsetzt, die für eine fluidische Verbindung zwischen einem der Ventile des Ventilmoduls 57 und einem der Ventile des Hauptventilmoduls 58 ausgebildet ist und die zu Orientierungszwecken auch in der Figur 4 eingezeichnet ist. An einer der Hauptoberflächen des in Figur 5 dargestellten Abschnitts 80 ist eine spiralförmige Leiteranordnung 82 ausgebildet, die mit nicht näher dargestellten elektronischen Komponenten auf der Leiterplatte 29 leitend in Verbindung steht und die zumindest im Wesentlichen konzentrisch zu der Bohrung 81 angeordnet ist. Die spiralförmige Leiteranordnung 82 dient als Detektorspule zur Bestimmung einer axialen Position des jeweils zugeordneten Hauptventils 56a, 56b, 56c oder 56d. Eine Sensoreinrichtung unter Verwendung einer Detektorspule ist in der PCT/EP2012/003051 offenbart, die durch ausdrückliche Einbeziehung zum Gegenstand dieser Offenbarung gemacht wird. Mit einer solchen in die Leiterplatte 29 integrierten spiralförmige Leiteranordnung 82 kann unter Zugrundelegung einer kostengünstigen Herstellungsweise eine präzise Ermittlung der Hubstellung des jeweils zugeordneten Hauptventils 56a, 56b, 56c oder 56d vorgenommen werden.

Bei einer nicht näher dargestellten Abwandlung der spiralförmige Leiteranordnung ist die Bohrung im Randbereich der spiralförmigen Leiteranordnung angeordnet, so dass sie exemplarisch nur wenigen Windungen, insbesondere nur von der letzten Windung, der spiralförmigen Leiteranordnung umgeben ist, wodurch eine für bestimmte Messzwecke vorteilhafte und von der konzentrischen Anordnung der Bohrung in der spiralförmigen Leiteranordnung abweichende Messcharakteristik erzielt werden kann.

## Patentansprüche

1. Ventilanordnung zur Beeinflussung wenigstens eines Fluidstroms, mit einer Steuereinrichtung (17) und wenigstens einer Ventileinrichtung (18), wobei die Steuereinrichtung (17) eine Busschnittstelle (20) für eine Verbindung mit einem Buskommunikationssystem (5) zum Empfang von Bewegungsbefehlen, eine Verarbeitungseinrichtung (21) zur Verarbeitung der Bewegungsbefehle in Steuerbefehle für Ventileinrichtungen (18) sowie wenigstens eine Anschlusseinrichtung (22, 23, 24, 25) zur elektrischen Ankopplung wenigstens einer Ventileinrichtung (18) aufweist und wobei die wenigstens eine Ventileinrichtung (18) mit der wenigstens einen Anschlusseinrichtung (22, 23, 24, 25) der Steuereinrichtung (17) elektrisch verbunden ist und ein Verarbeitungsmittel (28) umfasst, das zur Verarbeitung der Steuerbefehle ausgebildet ist, wobei dem Verarbeitungsmittel (28) wenigstens ein erstes Anschlussmittel (33) zur elektrischen Ankopplung von Ventilen (51a bis 51h, 56a bis 56d) und wenigstens ein Sensormittel (36, 37, 41, 42, 43, 44) zugeordnet ist und wobei das Verarbeitungsmittel (28) zur Verknüpfung von Sensorsignalen des wenigstens einen Sensormittels (36, 37, 41, 42, 43, 44) mit den Steuerbefehlen sowie für eine Verarbeitung der Sensorsignale, die von den Sensormitteln (36, 37, 41, 42, 43, 44) bereitgestellt werden, derart ausgebildet ist, dass durch die Verarbeitungsmittel (28) eine Druckregelung für die Ventile (51a bis 51h, 56a bis 56d) auf Basis von Signalen von Drucksensoren (36, 37) und/oder eine Positionsregelung für die Ventile (51a bis 51h, 56a bis 56d) auf Basis von Signalen von Positionssensoren durchgeführt werden kann, die in einer entsprechenden Ansteuerung der an den Anschlussmitteln (33) angeschlossenen Ventile (51a bis 51h, 56a bis 56d) resultiert.

2. Ventilanordnung nach Anspruch 1, **dadurch gekennzeichnet, dass** die Steuereinrichtung (17) in einem ersten Gehäuse und die wenigstens eine Ventileinrichtung (18) in einem zweiten, separaten Gehäuse aufgenommen sind und dass eine leitergebundene Verbindung (39) zwischen der Steuereinrichtung (17) und der Ventileinrichtung (18) ausgebildet ist.

3. Ventilanordnung nach Anspruch 1 oder 2, **dadurch gekennzeichnet, dass** an einem zweiten Anschlussmittel (40) der Ventileinrichtung (18) wenigstens ein Drucksensor (36, 37) zur Ermittlung eines Fluiddrucks und/oder wenigstens ein Positionssensor (41, 42, 43, 44) zur Ermittlung einer Ventilstellung eines Ventils (51a bis 51h, 56a bis 56d) angeschlossen ist.

4. Ventilanordnung nach Anspruch 1, 2 oder 3, **dadurch gekennzeichnet, dass** wenigstens ein fluidischer Aktor (7, 8) mit wenigstens einem der Ventile (51a bis 51h, 56a bis 56d) gekoppelt ist, dass die Verarbeitungseinrichtung (21) zur Ermittlung von Bewegungsprofilen für den wenigstens einen fluidischen Aktor (7, 8) anhand von Bewegungsbefehlen ausgebildet ist und dass die Verarbeitungseinrichtung (21) und/oder das Verarbeitungsmittel (28) für eine Umsetzung der Bewegungsprofile in Stellsignale für die Ventile (51a bis 51h, 56a bis 56d) ausgebildet sind.

5. Ventilanordnung nach Anspruch 1, 2, 3 oder 4, **dadurch gekennzeichnet, dass** der Verarbeitungseinrichtung (21) wenigstens eine externe Sensoreinrichtung (9, 10, 11, 12) zugeordnet ist und dass die Verarbeitungseinrichtung (21) für einen Empfang der Sensorsignale der wenigstens einen externen Sensoreinrichtung (9, 10, 11, 12) über das untergeordnete Buskommunikationssystem (5) und für eine Verarbeitung der Sensorsignale der wenigstens einen externen Sensoreinrichtung (9, 10, 11, 12) ausgebildet ist und dass die Verarbeitungseinrichtung (21) eine Speichereinrichtung umfasst, in der wenigstens ein Regelalgorithmus, insbesondere ein Stellungsregler und/oder ein Druckregler, gespeichert ist.

6. Ventilanordnung nach Anspruch 5, **dadurch gekennzeichnet, dass** wenigstens ein fluidischer Aktor (7, 8) mit wenigstens einem der Ventile (51a bis 51h, 56a bis 56d) gekoppelt ist, dass dem Aktor (7, 8) die wenigstens eine externe Sensoreinrichtung (9, 10, 11, 12) zugeordnet ist und dass die Verarbeitungseinrichtung (21) und/oder die Verarbeitungsmittel (28) zusammen mit den Sensormitteln (9, 10, 11, 12) und/oder den Sensoreinrichtungen (36, 37) eine Regelschleife bilden, um eine Druckregelung zur Beeinflussung einer Stellung des Aktors (7, 8) durchzuführen.

7. Ventilanordnung nach einem der vorhergehenden Ansprüche, **dadurch gekennzeichnet, dass** das Verarbeitungsmittel (28) für eine Weiterleitung von verarbeiteten Sensorsignalen der Sensormittel (36, 37) an die Steuereinrichtung (17) ausgebildet ist.

8. Ventilanordnung nach einem der vorhergehenden Ansprüche, **dadurch gekennzeichnet, dass** das Verarbeitungsmittel (28) wenigstens ein Ansteuermittel (38) für ein Ventil (51a bis 51h, 56a bis 56d) aufweist, das zur Bereitstellung einer elektrischen Versorgungsenergie, insbesondere einer Versorgungsspannung, an wenigstens ein Ventil (51a bis 51h, 56a bis 56d) ausgebildet ist.

9. Ventilanordnung nach einem der vorhergehenden Ansprüche, **dadurch gekennzeichnet, dass** am ersten Anschlussmittel (33) mehrere, insbesondere acht, unabhängig voneinander ansteuerbare Ventile (51a bis 51h), insbesondere Piezoventile, angeschlossen sind, die als pneumatische Vorsteuerventile dienen und dass die Ventile (51a bis 51h) mit, insbesondere vier, pneumatisch ansteuerbaren Hauptventilen (56a bis 56d) gekoppelt sind, die für eine Fluidbereitstellung an, insbesondere zwei, Arbeitsanschlüssen (74a, 74b) ausgebildet sind.

10. Ventilanordnung nach Anspruch 9 **dadurch gekennzeichnet, dass** wenigstens einem Arbeitsanschluss (74a, 74b) ein mit dem zweiten Anschlussmittel (40) der Ventileinrichtung (18) verbundener Drucksensor (36, 37) zugeordnet ist und/oder dass wenigstens einem Hauptventil (56a bis 56d) ein Positionssensor (41, 42, 43, 44) zur Ermittlung der Ventilstellung des Hauptventils (56a bis 56d) zugeordnet ist.

11. Ventilanordnung nach einem der vorhergehenden Ansprüche, **dadurch gekennzeichnet, dass** die Steuereinrichtung (17) und/oder die Ventileinrichtung (18) einen Umgebungsdrucksensor (27) und/oder einen Versorgungsdrucksensor (26) umfasst und dass die Verarbeitungseinrichtung (21) für einen Empfang eines Sensorsignals des Umgebungsdrucksensors (27) und/oder eines Sensorsignals des Versorgungsdrucksensors (26) ausgebildet ist.

12. Fluidisches System mit einer Steuerungseinrichtung (2), die für eine Bereitstellung von Bewegungsbefehlen an ein übergeordnetes Buskommunikationssystem (3) ausgebildet ist, mit einem übergeordneten Buskommunikationssystem (3), das für eine Datenkommunikation zwischen der Steuerungseinrichtung (2) und einer Ventilanordnung (6) nach einem der vorhergehenden Ansprüche ausgebildet ist, sowie mit einer Ventilanordnung (6) nach einem der vorhergehenden Ansprüche, die mit dem übergeordneten Buskommunikationssystem (5) verbunden ist.

13. Fluidisches System nach Anspruch 12, **dadurch gekennzeichnet, dass** zwischen dem übergeordneten Buskommunikationssystem (3) und der Steuerungseinrichtung (2) ein Buskoppler (4) angeordnet ist, der für eine bidirektionale Umsetzung von Busbefehlen zwischen dem übergeordneten Buskommunikationssystem (3) und einem untergeordneten Buskommunikationssystem (5) ausgebildet ist, wobei das untergeordnete Buskommunikationssystem (5) zwischen dem Buskoppler (4) und der Steuerungseinrichtung (2) ausgebildet ist.

14. Fluidisches System nach Anspruch 12 oder 13, **dadurch gekennzeichnet, dass** wenigstens ein Aktor (7, 8) mit der Ventilanordnung (6) fluidisch verbunden ist, dass wenigstens eine Eingangs-Ausgangseinrichtung (16) mit dem Buskommunikationssystem (5) verbunden ist und dass dem Aktor (7, 8) wenigstens ein Positionssensor (9, 10, 11, 12) zugeordnet ist, der elektrisch mit der Eingangs-Ausgangseinrichtung (16) verbunden ist, um eine Bereitstellung eines Positionssignals an die Verarbeitungseinrichtung (21) zu ermöglichen.

15. Fluidisches System nach Anspruch 12, 13 oder 14, **dadurch gekennzeichnet, dass** die Ventilanordnung (6) ein Ventilgehäuse (71, 73) umfasst, in dem Ventilschächte (52a bis 52d) zur paarweisen Aufnahme von Ventilpatronen ausgebildet sind, sowie mit Ventilpatronen, die in den Ventilschächten (52a bis 52d) angeordnet sind, wobei die Ventilschächte (52a bis 52d) zusammen mit den darin aufgenommenen Ventilpatronen jeweils einen Druckraum begrenzen, der in fluidisch kommunizierender Verbindung mit einem zugeordneten Eingangsanschluss steht und wobei die Ventilpatronen jeweils zwei elektrisch ansteuerbare Ventile (51a bis 51h) umfassen, die jeweils dazu ausgebildet sind, einen freien Strömungsquerschnitt zwischen dem Druckraum und einem dem jeweiligen Ventil (51a bis 51h)zugeordneten Ausgangsanschluss (53a bis 53h) zu beeinflussen.

## Claims

1. Valve assembly for influencing at least one fluid flow, the valve assembly comprising a control unit (17) and at least one valve device (18), wherein the control unit (17) comprises a bus interface (20) for connection to a bus communication system (5) for the reception of movement instructions, a processing device (21) for processing the movement instructions into control commands for valve devices (18) and at least one connecting device (22, 23, 24, 25) for the electric coupling of at least one valve device (18), and wherein the at least one valve device (18) is electrically connected to the at least one connecting device (22, 23, 24, 25) of the control unit (17) and comprises a processing means (28) designed for processing the control commands, wherein the processing means (28) is assigned at least one first connecting means (33) for the electric coupling of valves (51a to 51h, 56a to 56d) and at least one sensor means (36, 37, 41, 42, 43, 44), and wherein the processing means (28) is designed for linking sensor signals of the at least one sensor means (36, 37, 41, 42, 43, 44) to the control commands and for processing of sensor signals which are provided by the at least one sensor means (36, 37, 41, 42, 43, 44), wherein the processing means (28) are designed for providing a pressure control for the valves (51a to 51h, 56a to 56d) based on signals of pressure sensors (36, 37) and/or a position control for the valves (51a to 51h, 56a to 56d) based on signals of position sensors, resulting in a control of the valves (51a to 51h, 56a to 56d) connected to the first connecting contacts.

2. Valve assembly according to claim 1, **characterised in that** the control unit (17) is accommodated in a first housing and the at least one valve device (18) is accommodated in a second, separate, housing, and **in that** a conductor-bound connection (39) is provided between the control unit (17) and the valve device (18).

3. Valve assembly according to claim 1 or 2, **characterised in that** at least one pressure sensor (36, 37) for detecting a fluid pressure and/or at least one position sensor (41, 42, 43, 44) for detecting a valve position of a valve (51a to 51h, 56a to 56d) is/are connected to a second connecting means (40) of the valve device (18).

4. Valve assembly according to claim 1, 2 or 3, **characterised in that** at least one fluidic actuator (7, 8) is coupled to at least one of the valves (51a to 51h, 56a to 56d), **in that** the processing device (21) is designed for determining movement profiles for the at least one fluidic actuator (7, 8), using movement instructions, and **in that** the processing device (21) and/or the processing means (28) is/are designed for converting the movement profiles into actuating signals for the valves (51a to 51h, 56a to 56d).

5. Valve assembly according to claim 1, 2, 3 or 4, **characterised in that** at least one external sensor device (9, 10, 11, 12) is assigned to the processing device (21), and **in that** the processing device (21) is designed for a reception of the sensor signals of the at least one external sensor device (9, 10, 11, 12) via the lower-order bus communication system (5) and for processing the sensor signals of the at least one external sensor device (9, 10, 11, 12), and **in that** the processing device (21) comprises a storage device in which at least one control algorithm, in particular a position controller and/or a pressure controller, is stored.

6. Valve assembly according to claim 5, **characterised in that** at least one fluidic actuator (7, 8) is coupled to at least one of the valves (51a to 51h, 56a to 56d), **in that** the at least one external sensor device (9, 10, 11, 12) is assigned to the actuator (7, 8), and **in that** the processing device (21) and/or the processing means (18), together with the sensor means (9, 10, 11, 12) and/or the sensor devices (36, 37), form(s) a control loop for controlling a pressure for influencing a position of the actuator (7, 8).

7. Valve assembly according to any of the preceding claims, **characterised in that** the processing means (28) is designed for transferring processed sensor signals of the sensor means (36, 37) to the control unit (17).

8. Valve assembly according to any of the preceding claims, **characterised in that** the processing means (28) comprises at least one control means (38) for a valve (51a to 51h, 56a to 56d), which is designed for providing an electric supply energy, in particular a supply voltage, to at least one valve (51a to 51h, 56a to 56d).

9. Valve assembly according to any of the preceding claims, **characterised in that** several, in particular eight, independently selectable valves (51a to 51h) serving as pneumatic pilot valves are connected to the first connecting means (33), and **in that** the valves (51a to 51h) are coupled to in particular four pneumatically selectable main valves (56a to 56d) designed for providing fluid at in particular two working ports (74a, 74b).

10. Valve assembly according to claim 9, **characterised in that** at least one working port (74a, 74b) is assigned a pressure sensor (36, 37) connected to the second connecting means (40) of the valve device (18), and/or **in that** at least one main valve (56a to 56d) is assigned a position sensor (41, 42, 43, 44) for detecting the valve position of the main valve (56a to 56d) .

11. Valve assembly according to any of the preceding claims, **characterised in that** the control unit (17) and/or the valve device (18) comprise(s) an ambient pressure sensor (27) and/or a supply pressure sensor (26), and **in that** the processing device (21) is designed for a reception of a sensor signal of the ambient pressure sensor (27) and/or of a sensor signal of the supply pressure sensor (26).

12. Fluidic system, comprising a control device (2) designed for making available movement instructions to a higher-order bus communication system (3), comprising a higher-order bus communication system (3) designed for a data communication between the control device (2) and a valve assembly (6) according to any of the preceding claims, which is connected to the higher-order bus communication system (5).

13. Fluidic system according to claim 12, **characterised in that** a bus coupler (4) designed for a bidirectional conversion of bus commands between the higher-order bus communication system (3) and a lower-order bus communication system (5) is provided between the higher-order bus communication system (3) and the control device (2), the lower-order bus communication system (5) being formed between the bus coupler (4) and the control device (2).

14. Fluidic system according to claim 12 or 13, **characterised in that** at least one actuator (7, 8) is fluidically connected to the valve assembly (6), **in that** at least one input/output device (16) is connected to the bus communication system (5), and **in that** the actuator (7, 8) is assigned at least one position sensor (9, 10, 11, 12) electrically connected to the input/output device (16) to facilitate a provision of a position signal to the processing device (21).

15. Fluidic system according to claim 12, 13 or 14, **characterised in that** the valve assembly (6) comprises a valve housing (71, 73), in which valve shafts (52a to 52d) are formed for the accommodation of pairs of valve cartridges, and **in that** it further comprises valve cartridges which are located in the valve shafts (52a to 52d), wherein each of the valve shafts (52a to 52d) together with the valve cartridges located therein bounds a pressure chamber in fluidically communicating connection to an associated input port, and wherein each of the valve cartridges comprises two electrically selectable valves (51a to 51h), each of which is designed to influence a free flow cross-section between the pressure chamber and an output port (53a to 53h) assigned to the respective valve (51a to 51h) .

## Revendications

1. Ensemble de soupapes servant à influencer au moins un flux de fluide, avec un dispositif de commande (17) et au moins un dispositif de soupape (18), dans lequel le dispositif de commande (17) présente une interface de bus (20) pour une liaison avec un système de communication par bus (5) servant à recevoir des instructions de déplacement, un dispositif de traitement (21) servant à traiter des instructions de déplacement en des instructions de commande pour des dispositifs de soupape (18) ainsi qu'au moins un dispositif de raccordement (22, 23, 24, 25) servant à accoupler de manière électrique au moins un dispositif de soupape (18) et dans lequel l'au moins un dispositif de soupape (18) est relié de manière électrique à l'au moins un dispositif de raccordement (22, 23, 24, 25) du dispositif de commande (17) et comprend un moyen de traitement (28), qui est réalisé pour traiter des instructions de commande, dans lequel au moins un premier moyen de raccordement (33) servant à accoupler de manière électrique des soupapes (51a à 51h, 56a à 56d) et au moins un moyen de capteur (36, 37, 41, 42, 43, 44) est associé au moyen de traitement (28) et dans lequel le moyen de traitement (28) est réalisé pour combiner des signaux de capteur de l'au moins un moyen de capteur (36, 37, 41, 42, 43, 44) à des instructions de commande ainsi que pour un traitement des signaux de capteur, qui sont fournis par les moyens de capteur (36, 37, 41, 42, 43, 44), de telle manière qu'une régulation de pression pour les soupapes (51a à 51h, 56a à 56d) sur la base de signaux de capteur de pression (36, 37) et/ou une régulation de position pour les soupapes (51a à 51h, 56a à 56d) sur la base de signaux de capteurs de position peuvent être effectuées par les moyens de traitement (28), laquelle régulation résulte en un pilotage correspondant des soupapes (51a à 51h, 56a à 56d) raccordées aux moyens de raccordement (33).

2. Ensemble de soupapes selon la revendication 1, **caractérisé en ce que** le dispositif de commande (17) est logé dans un premier carter et l'au moins un dispositif de soupape (18) est logé dans un deuxième carter séparé, et qu'une liaison filaire (39) est réalisée entre le dispositif de commande (17) et le dispositif de soupape (18).

3. Ensemble de soupapes selon la revendication 1 ou 2, **caractérisé en ce qu'**au moins un capteur de pression (36, 37) servant à déterminer une pression de fluide et/ou au moins un capteur de position (41, 42, 43, 44) servant à déterminer une position de soupape d'une soupape (51a à 51h, 56a à 56d) sont raccordés à un deuxième moyen de raccordement (40) du dispositif de soupape (18).

4. Ensemble de soupapes selon la revendication 1, 2 ou 3, **caractérisé en ce qu'**au moins un actionneur fluidique (7, 8) est couplé à au moins une des soupapes (51a à 51h, 56a à 56d), que le dispositif de traitement (21) est réalisé pour déterminer des profils de déplacement pour l'au moins un actionneur fluidique (7, 8) à l'aide d'instructions de déplacement, et que le dispositif de traitement (21) et/ou le moyen de traitement (28) sont réalisés pour convertir les profils de déplacement en des signaux de réglage pour les soupapes (51a à 51h, 56a à 56d).

5. Ensemble de soupapes selon la revendication 1, 2, 3 ou 4, **caractérisé en ce qu'**au moins un dispositif de capteur externe (9, 10, 11, 12) est associé au dispositif de traitement (21), et que le dispositif de traitement (21) est réalisé pour une réception des signaux de capteur de l'au moins un dispositif de capteur externe (9, 10, 11, 12) par l'intermédiaire du système de communication par bus (5) esclave et pour un traitement des signaux de capteur de l'au moins un dispositif de capteur externe (9, 10, 11, 12), et que le dispositif de traitement (21) comprend un dispositif de mémorisation, dans lequel au moins un algorithme de régulation, en particulier un régulateur de réglage et/ou un régulateur de pression, est mémorisé.

6. Ensemble de soupapes selon la revendication 5,
**caractérisé en ce qu'**au moins un actionneur fluidique (7, 8) est couplé à au moins une des soupapes (51a à 51h, 56a à 56d), que l'au moins un dispositif de capteur externe (9, 10, 11, 12) e est associé à l'actionneur (7, 8), et que le dispositif de traitement (21) et/ou les moyens de traitement (28) forment conjointement avec les moyens de capteur (9, 10, 11, 12) et/ou avec les dispositifs de capteur (36, 37), une boucle de régulation pour réaliser une régulation de pression servant à influencer un réglage de l'actionneur (7, 8).

7. Ensemble de soupapes selon l'une quelconque des revendications précédentes, **caractérisé en ce que** le moyen de traitement (28) est réalisé pour un transfert de signaux de capteur traités des moyens de capteur (36, 37) au dispositif de commande (17).

8. Ensemble de soupapes selon l'une quelconque des revendications précédentes, **caractérisé en ce que** le moyen de traitement (28) présente au moins un moyen de pilotage (38) pour une soupape (51a à 51h, 56a à 56d), qui est réalisé pour fournir une énergie d'alimentation électrique, en particulier une tension d'alimentation, à au moins une soupape (51a à 51h, 56a à 56d).

9. Ensemble de soupapes selon l'une quelconque des revendications précédentes, **caractérisé en ce que** sont raccordées au premier moyen de raccordement (33), plusieurs, en particulier huit, soupapes (51a à 51h) pouvant être pilotées indépendamment les unes des autres, en particulier des soupapes piézoélectriques, qui font office de soupapes pilotes pneumatiques, et que les soupapes (51a à 51h) sont couplées à en particulier quatre soupapes principales (56a à 56h) pouvant être pilotées de manière pneumatique, qui sont réalisées pour fournir un fluide à en particulier deux raccords de travail (74a, 74b).

10. Ensemble de soupapes selon la revendication 9, **caractérisé en ce qu'**un capteur de pression (36, 37) relié au deuxième moyen de raccordement (40) du dispositif de soupape (18) est associé à au moins un raccord de travail (74a, 74b), et/ou qu'un capteur de position (41, 42, 43, 44) servant à déterminer la position de soupape de la soupape principale (56a à 56d) est associé à au moins une soupape principale (56a à 56d).

11. Ensemble de soupapes selon l'une quelconque des revendications précédentes, **caractérisé en ce que** le dispositif de commande (17) et/ou le dispositif de soupape (18) comprend un capteur de pression ambiante (27) et/ou un capteur de pression d'alimentation (26), et que le dispositif de traitement (21) est réalisé pour une réception d'un signal de capteur du capteur de pression environnante (27) et/ou d'un signal de capteur du capteur de pression d'alimentation (26).

12. Système fluidique avec un dispositif de commande (2), qui est réalisé pour fournir des instructions de déplacement à un système de communication par bus (3) maître, avec un système de communication par bus (3) maître, qui est réalisé pour une communication de données entre le dispositif de commande (2) et un ensemble de soupapes (6) selon l'une quelconque des revendications précédentes, ainsi qu'avec un ensemble de soupapes (6) selon l'une quelconque des revendications précédentes, qui est relié au système de communication par bus (5) maître.

13. Système fluidique selon la revendication 12, **caractérisé en ce qu'**est disposé entre le système de communication par bus (3) maître et le dispositif de commande (2), un coupleur de bus (4), qui est réalisé pour une conversion bidirectionnelle d'instructions de bus entre le système de communication par bus (3) maître et un système de communication par bus (5) esclave, dans lequel le système de communication par bus (5) esclave est réalisé entre le coupleur de bus (4) et le dispositif de commande (2).

14. Système fluidique selon la revendication 12 ou 13, **caractérisé en ce qu'**au moins un actionneur (7, 8) est relié de manière fluidique à l'ensemble de soupapes (6), qu'au moins un dispositif d'entrée-sortie (16) est relié au système de communication par bus (5), et qu'est associé à l'actionneur (7, 8) au moins un capteur de position (9, 10, 11, 12), qui est relié de manière électrique au dispositif d'entrée-sortie (16) pour permettre de fournir un signal de position au dispositif de traitement (21).

15. Système fluidique selon la revendication 12, 13 ou 14, **caractérisé en ce que** l'ensemble de soupapes (6) comprend un carter de soupape (71, 73), dans lequel des compartiments de soupape (52a à 52d) sont réalisés pour loger par paire des cartouches de soupape, ainsi qu'avec des cartouches de soupape, qui sont disposées dans les compartiments de soupape (52a à 52d), dans lequel les compartiments de soupape (52a à 52d) délimitent conjointement avec les cartouches de soupape logées dans ceux-ci respectivement un espace de pression, qui est en communication fluidique avec un raccord d'entrée associé et dans lequel les cartouches de soupape comprennent respectivement deux soupapes (51a à 51h) pouvant être pilotées de manière électrique, qui sont réalisées respectivement pour influencer une section transversale d'écoulement libre entre l'espace de pression et un raccord de sortie (53a à 53h) associé à la soupape (51a à 51h) respective.
